# EUROPÄISCHE PATENTANMELDUNG

(11) **EP 1 198 052 A2**
(43) Veröffentlichungstag der Anmeldung: **17.04.2002**
(21) Anmeldenummer: 01122832.7
(22) Anmeldetag: 22.09.2001
(51) Int. Cl.: H02K 15/02, B21D 11/10, B21D 35/00

(54) **Verfahren zur Herstellung eines Nuten aufweisenden Rotorpaketes**

(30) Priorität: 11.10.2000 DE 10050152
(71) Anmelder: ROBERT BOSCH GMBH, 70442 Stuttgart (DE)
(72) Erfinder: Antl, Oswald, 31174 Ottberge (DE); Wessels, Siegbert, 31141 Hildesheim (DE)

(57) **Zusammenfassung**

Die vorliegende Anmeldung betrifft ein Verfahren zur Herstellung eines Nuten aufweisenden Rotorpaketes für den Rotor einer elektrischen Maschine, insbesondere den Rotor eines Starters oder Startergenerators.

Das Verfahren umfasst die folgenden Schritte:
a) Vorsehen eines im Wesentlichen linearen Materialstreifens (1), der Ausnehmungen (2) aufweist, die den Nuten zugeordnet sind, wobei der Materialstreifen (1) eine erste Längsseite (3) und eine zweite Längsseite (4) aufweist.
b) Hochkantrollen des Materialstreifens (1), derart, dass der Materialstreifen (1) über seine zweite Längsseite (4) gebogen wird.
c) Bilden des Rotorpaketes aus einem oder mehreren der hochkantgerollten Materialstreifen (1).

Ferner betrifft die Anmeldung eine Vorrichtung zur Durchführung des Verfahrens sowie ein Rotorpaket für den Rotor einer elektrischen Maschine.

## Beschreibung

Die vorliegende Erfindung betrifft ein Verfahren zur Herstellung eines Nuten aufweisenden Rotorpaketes für den Rotor einer elektrischen Maschine, insbesondere den Rotor eines Starters oder Startergenerators. Weiterhin betrifft die vorliegende Erfindung eine Vorrichtung zur Durchführung des Verfahrens sowie ein Rotorpaket.

### Stand der Technik

Bekannte Verfahren zur Herstellung eines Nuten aufweisenden Rotorpaketes für den Rotor einer elektrischen Maschine sehen beispielsweise eine Kombination von an ein und demselben Werkstück durchgeführten Dreh- und Fräs- beziehungsweise Stanzverfahren vor, wobei auch eine einstückige Herstellung des Rotorkörpers möglich ist. Weiterhin ist es bekannt, das Rotorpaket bildende Rotorbleche einteilig zu stanzen. Pro einteilig gestanztem Rotorblech ergibt sich der Materialeinsatz hierbei im Einzelschnitt als quadratische Fläche mit einem Kantenmaß, das dem um eine Mindeststegbreite vergrößerten Runddurchmesser entspricht. Da der Rotor in der Regel die Achse der elektrischen Maschinen im Wesentlichen koaxial umgibt, sind die einteilig gestanzten Rotorbleche in der Regel ringförmig. Die beim einteiligen Stanzen anfallende Abfallmenge ist beachtlich und steigt mit zunehmendem Innendurchmesser des ringförmigen Rotorbleches weiter an, wodurch die Herstellungskosten insgesamt erhöht werden. Um die beim Stanzen anfallende Abfallmenge zumindest etwas zu verringern, ist es bereits bekannt, insbesondere ringförmige Rotorbleche mit kleinerem Durchmesser nebeneinander versetzt zu stanzen. Allerdings sind bei dieser Vorgehensweise kompliziertere Stanzwerkzeuge erforderlich und die Abfallmenge bleibt trotzdem beachtlich.

### Vorteile der Erfindung

Dadurch, dass das erfindungsgemäße Verfahren die Schritte: a) Vorsehen zumindest eines im Wesentlichen linearen Materialstreifens, der Ausnehmungen aufweist, die den Nuten zugeordnet sind, wobei der Materialstreifen eine erste Längsseite und eine zweite Längsseite aufweist, b) Hochkantrollen des Materialstreifens, derart, dass der Materialstreifen über seine zweite Längsseite gebogen wird, und c) Bilden des Rotorpaketes aus einem oder mehreren der hochkantgerollten Materialstreifen, umfasst, kann die bei der Herstellung des Rotorpaketes anfallende Abfallmenge erheblich reduziert werden, was die Herstellungskosten senkt.

Gleiches gilt für das erfindungsgemäße Rotorpaket für den Rotor einer elektrischen Maschine, bei dem vorgesehen ist, dass das Rotorpaket aus einem oder mehreren hochkantgerollten Materialstreifen besteht.

Eine Ausführungsform des erfindungsgemäßen Verfahrens sieht vor, dass Schritt a) die folgenden Schritte umfasst: a1) Vorsehen des linearen Materialstreifens, a2) plastisches Verformen des Materialstreifens, derart, dass auf einer ersten Längsseite des Materialstreifens eine Wellenkontur entsteht, und a3) Ausbilden der Ausnehmungen in dem die Wellenkontur aufweisenden Materialstreifen. Vorzugsweise wird durch die plastische Verformung des Materialstreifens eine regelmäßige Wellenbildung auf der ersten Längsseite des Materialstreifens hervorgerufen, während die zweite Längsseite des Materialstreifens flach bleibt. Die Ausbildung der Ausnehmungen kann dabei beispielsweise dadurch erfolgen, dass die auf die Wellenkontur der elektrischen Maschine projizierten Nutöffnungen in den gleichmäßig gewellten Materialstreifen gestanzt werden. Im nachfolgenden Schritt b) wird der die Ausnehmungen aufweisende Materialstreifen derart über den durch die zweite Längsseite des Materialstreifens gebildeten nicht verformten Rücken gebogen, dass der gewellte Rand des Materialstreifens wieder eben wird.

Vorzugsweise sind die Ausnehmungen zumindest vor der Durchführung des Schrittes b) ringsum von dem Material des Materialstreifens umgeben. Wenn die Ausnehmungen auch nach der Durchführung des Schrittes b) noch ringsum von dem Material des Materialstreifens umgeben sind, kann ein Rotorpaket mit nach außen gerichteten, geschlossenen Nuten gebildet werden. Diese Nuten können später die Rotorwicklung aufnehmen. Für den Fall, dass es sich bei dem das Rotorpaket umfassenden Rotor um einen einen Käfigläufer darstellenden Kurzschlussrotor handelt, können die Nuten entsprechende Stäbe aufnehmen, beziehungsweise es können entsprechende Kurzschlussringe vorgesehen sein.

Eine weitere Ausführungsform der vorliegenden Erfindung sieht vor, dass die Ausnehmungen derart gebildet werden, dass zwischen den Ausnehmungen und der ersten Längsseite des Materialstreifens jeweils ein Steg verbleibt, und dass die Stege bei der Durchführung des Schrittes b) in ihre endgültige Lage gezogen werden. Die Ausnehmungen können dabei gebildet werden, indem der ebene Materialstreifen gestanzt wird.

In diesem Zusammenhang kann es vorteilhaft sein, wenn die Stege zumindest vor der Durchführung des Schrittes b) gebogen sind. Die Biegung der Stege kann dabei bei der Durchführung des Schrittes b), bei dem die Stege in ihre endgültige Lage gezogen werden, ganz oder teilweise aufgehoben werden.

Eine weitere Ausführungsform des erfindungsgemäßen Verfahrens sieht vor, dass die Ausnehmungen derart gebildet werden, dass zwischen den Ausnehmungen und der ersten Längsseite des Materialstreifens jeweils ein Dehnbereich verbleibt, und dass die Dehnbereiche bei der Durchführung des Schrittes b) gedehnt werden. Da zumindest geringfügig geöffnete Nuten in vielen Fällen Vorteile hinsichtlich der Performance der elektrischen Maschinen mit sich bringen, kann weiterhin vorgesehen sein, dass zum Erzeugen einer zumindest geringfügig geöffneten Nut ein gezieltes Überdehnen und Reißen in den Dehnbereichen durchgeführt wird, oder dass in diesen Dehnbereichen vor dem Hochkantrollen ein abfallfreier Trennschnitt vorgenommen wird.

Selbstverständlich können die vorstehend erwähnten Ausführungsformen des erfindungsgemäßen Verfahrens beliebig kombiniert werden.

Unabhängig von der speziellen Ausführungsform des erfindungsgemäßen Verfahrens kann vorgesehen sein, dass der Schritt c) das Bilden einer Wendel aus dem hochkantgerollten Materialstreifen umfasst. Dadurch können aus einem einzigen Materialstreifen mehrere Schichten von Rotorblechen gebildet werden. Damit sich die gattungsgemäß vorhandenen Nuten ergeben, müssen entsprechende Ausnehmungen beim Bilden der Wendel miteinander ausgerichtet werden. Selbstverständlich ist es ebenfalls möglich, dass jeder hochkantgerollte Materialstreifen nur einen Ring beziehungsweise den Teilabschnitt eines Rings bildet.

Das erfindungsgemäße Verfahren kann besonders vorteilhaft angewendet werden, wenn die Wendel mit einem Innendurchmesser von mindestens 180 mm gebildet wird. Allgemein ermöglichen ein relativ großer Innendurchmesser und eine relativ kleine Breite des Materialstreifens eine einfachere Durchführung des Hochkantrollens.

Die Ausnehmungen können wie erwähnt durch ein Stanzverfahren gebildet werden.

Weiterhin kann vorgesehen sein, dass der Materialstreifen aus einem Stahlwerkstoff gebildet ist. Stahlwerkstoffe weisen in vielen Fällen Eigenschaften auf, die sich beim Hochkantrollen positiv auswirken.

Es kann vorgesehen sein, dass die Ausnehmungen beziehungsweise die Nuten dazu ausgelegt sind, zumindest teilweise mit einem Material gefüllt zu werden, das einen Aluminiumanteil aufweist. Weiterhin kann auch an den Stirnseiten des Rotorpaketes ein derartiges aluminiumhaltiges Material vorgesehen sein. Eine derartige Ausführungsform kommt insbesondere im Zusammenhang mit Kurzschlussläufern in Betracht.

Anstelle des Materials, das einen Aluminiumanteil aufweist, kann auch ein Material gewählt werden, das einen Kupferanteil aufweist.

Das erfindungsgemäße Verfahren kann vorsehen, dass in dem Materialstreifen vor der Durchführung des Schrittes b) zusätzlich zu den Ausnehmungen Befestigungsdurchbrüche vorgesehen werden. Beispielsweise in einem Fall, in dem der hochkantgerollte Materialstreifen zu einer Wendel gelegt wird, können entsprechend ausgerichtete Befestigungsdurchbrüche mit geeigneten Befestigungsmitteln wie Schrauben, Nieten, Bolzen oder dergleichen zusammenwirken, um das Rotorpaket zu fixieren und/oder es mit anderen Rotorkomponenten zu verbinden. Weiterhin ist es denkbar, dass die Verbindung der Wendel innerhalb der Spirale durch eine Verknüpfung erfolgt, wie sie beim Stanzpaketieren verwendet wird. Dabei greift eine Ausprägung in die rückseitige Kerbe der benachbarten Ausprägung.

Der Schutzbereich der vorliegenden Erfindung erstreckt sich ebenfalls auf eine Vorrichtung zur Durchführung des erfindungsgemäßen Verfahrens.

Auch das erfindungsgemäße Rotorpaket weist vorzugsweise Nuten auf, die durch in dem hochkantgerollten Materialstreifen vorgesehene Ausnehmungen gebildet sind. Derartige Nuten dienen beispielsweise zur Aufnahme der Rotorwicklung, wie oben erwähnt.

Vorzugsweise sind die Nuten nach außen gerichtet und/oder es handelt sich um geschlossene Nuten. Geschlossene Nuten sind insbesondere bei der Herstellung von Kurzschlusskäfigen vorteilhaft, weil dann ein geringerer Werkzeugverschleiß zu erwarten ist.

Auch bei dem erfindungsgemäßen Rotorpaket können die Ausnehmungen beziehungsweise Nuten dazu ausgelegt sein, zumindest teilweise mit einem Material gefüllt zu werden, das einen Aluminiumanteil und/oder einen Kupferanteil aufweist.

Im Übrigen wird auf die im Zusammenhang mit dem erfindungsgemäßen Verfahren erwähnten Eigenschaften und Vorteile verwiesen.

### Zeichnungen

Die Erfindung wird nachfolgend anhand der zugehörigen Zeichnungen näher erläutert.

Es zeigen:
- Figur 1a: einen Materialstreifen nach der Durchführung des Verfahrensschrittes a) gemäß einer ersten Ausführungsform der vorliegenden Erfindung in der Draufsicht.
- Figur 1b: den Materialstreifen gemäß Figur 1a in einer Seitenansicht;
- Figur 2a: einen Materialstreifen nach der Durchführung des Verfahrensschrittes a) gemäß einer zweiten Ausführungsform der vorliegenden Erfindung;
- Figur 2b: einen Materialstreifen nach der Durchführung des Verfahrensschrittes a) gemäß einer Abwandlung der zweiten Ausführungsform des erfindungsgemäßen Verfahrens;
- Figur 3: einen Materialstreifen nach der Durchführung des Verfahrensschrittes a) gemäß einer dritten Ausführungsform des erfindungsgemäßen Verfahrens.

### Beschreibung der Ausführungsbeispiele

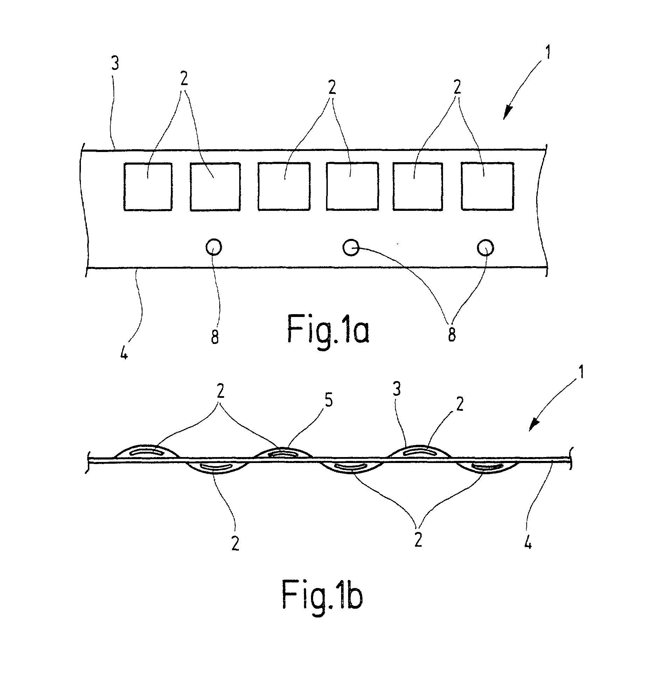

Die Figuren 1a und 1b zeigen einen Materialstreifen nach der Durchführung des Verfahrensschrittes a) gemäß einer ersten Ausführungsform der vorliegenden Erfindung, das heißt vor dem Hochkantrollen. Der insgesamt mit 1 bezeichnete Materialstreifen weist eine erste Längsseite 3 und eine zweite Längsseite 4 auf. Der Materialstreifen 1 weist Ausnehmungen 2 auf, die (nach dem Bilden des Rotorpaketes) Nuten zugeordnet sind, die später die Rotorwicklung, Stäbe oder dergleichen aufnehmen. Weiterhin weist der Materialstreifen 1 Befestigungsdurchbrüche beziehungsweise -Bohrungen 8 auf, die dazu vorgesehen sind, die einzelnen Schichten des Rotorpaketes miteinander zu verbinden und/oder das Rotorpaket mit weiteren Bestandteilen des Rotors zu verbinden.

Der in den Figuren 1a und 1b dargestellte Materialstreifen kann wie folgt hergestellt werden. Zunächst wird der noch keine Ausnehmungen 2 und Befestigungsdurchbrüche 8 aufweisende Materialstreifen derart plastisch verformt, dass auf seiner ersten Längsseite eine gleichmäßige Wellenkontur 5 entsteht, wie dies Figur 1b zu entnehmen ist, die eine Seitenansicht auf die zweite Längsseite des Materialstreifens darstellt. Anschließend werden die Ausnehmungen 2 und gegebenenfalls die Befestigungsdurchbrüche 8 in dem die Wellenkontur aufweisenden Materialstreifen vorgesehen, beispielsweise durch einen Stanzvorgang. Wie dies Figur 1a zu entnehmen ist, sind die Ausnehmungen 2 ringsum von dem Material des Materialstreifens umgeben. Wenn dieser Zustand auch nach der Durchführung des Hochkantrollens gemäß Verfahrensschritt c) aufrechterhalten wird, kann aus dem Materialstreifen 1 ein Rotorpaket mit nach außen gerichteten geschlossenen Nuten gebildet werden. Bezüglich des in den Figuren 1a und 1b dargestellten Materialstreifens wird das Hochkantrollen derart durchgeführt, dass der Materialstreifen über seinen nicht verformten Rücken, das heißt über seine zweite Längsseite 4 derart gebogen wird, dass der gewellte Rand wieder eben wird. Anschließend kann das Rotorpaket gemäß dem Verfahrensschritt c) aus einem oder mehreren derart hochkantgerollten Materialstreifen gebildet werden, beispielsweise indem ein Materialstreifen 1 mit entsprechender Länge zu einer Wendel gelegt wird, die anschließend durch in die Befestigungsdurchbrüche 8 eingeführte Befestigungsmittel fixiert wird, um das Rotorpaket zu bilden.

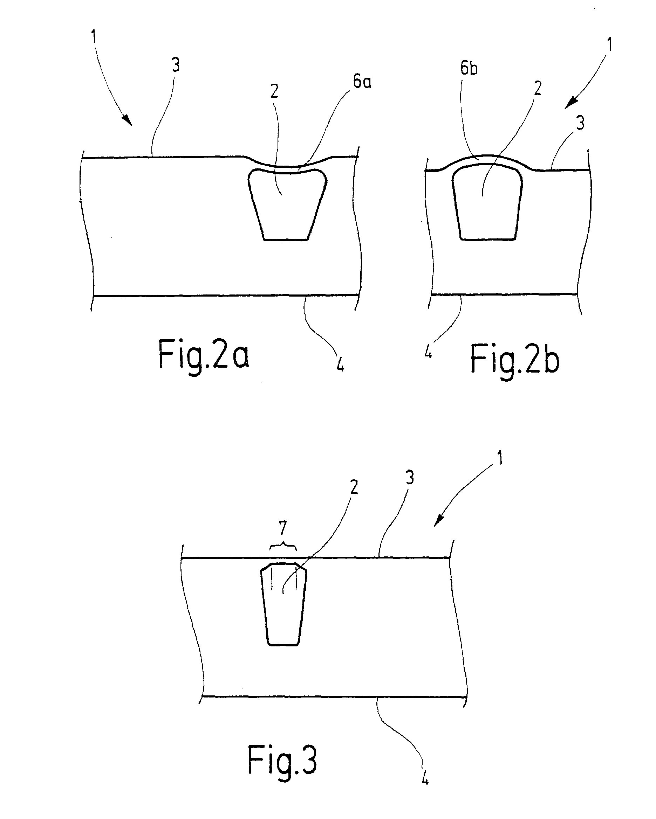

Figur 2a zeigt einen insgesamt mit 1 bezeichneten Materialstreifen nach der Durchführung des Verfahrensschrittes a) gemäß einer zweiten Ausführungsform der vorliegenden Erfindung. Der Materialstreifen 1 weist eine erste Längsseite 3 und eine zweite Längsseite 4 auf. Obwohl in der Praxis eine Vielzahl von Ausnehmungen 2 vorgesehen ist, ist in Figur 2a der Einfachheit halber nur eine Ausnehmung 2 dargestellt, die ringsum von dem Material des Materialstreifens umgeben ist. Die Ausnehmung 2 ist im Bereich der ersten Längsseite 3 des Materialstreifens 1 angeordnet, wobei bei dieser Ausführungsform zwischen der Ausnehmung 2 und der ersten Längsseite 3 des Materialstreifens 1 ein Steg 6a vorgesehen ist. Wie dies Figur 2a zu entnehmen ist, ist der Steg 6a bezüglich der Ausnehmung 2 nach innen gebogen. Der in Figur 2a dargestellte Materialstreifen 1 kann beispielsweise durch ein Stanzverfahren hergestellt werden, das auf einen ebenen Materialstreifen angewendet wird. Obwohl dies in Figur 2a nicht dargestellt ist, können selbstverständlich auch bei dieser Ausführungsform nicht dargestellte Befestigungsdurchbrüche vorgesehen werden. Beim Hochkantrollen des Materialstreifens 1 gemäß Figur 2a wird der Steg 6a in seine endgültige Lage gezogen, beispielsweise derart, dass die erste Längsseite 3 des Materialstreifens 1 kreisförmig gebogen wird. Die Bildung des Rotorpaketes kann dann wie anhand der Figuren 1a und 1b beschrieben erfolgen.

Figur 2b zeigt einen insgesamt mit 1 bezeichneten Materialstreifen nach der Durchführung des Verfahrensschrittes a) gemäß einer Abwandlung der zweiten Ausführungsform der vorliegenden Erfindung. Der in Figur 2b dargestellte Materialstreifen 1 entspricht im Wesentlichen dem Materialstreifen 1 von Figur 2a, mit der Ausnahme, dass ein Steg 6b vorgesehen ist, der bezüglich der Ausnehmung 2 und der ersten Längsseite 3 des Materialstreifens 1 nach außen gebogen ist. Diese Abwandlung der zweiten Ausführungsform der vorliegenden Erfindung hat den Vorteil, dass der nach außen gebogene Steg 6b praktisch mit beliebiger Größe vorgesehen werden kann. Allerdings verursacht ein nach außen gebogener Steg 6b eine größere Abfallmenge als ein nach innen gebogener Steg 6a, beispielsweise wenn ein Stanzverfahren zur Bildung der Ausnehmung und der Stege 6a, 6b eingesetzt wird.

Figur 3 zeigt einen Materialstreifen 1 nach der Durchführung des Verfahrensschrittes a) gemäß einer dritten Ausführungsform der vorliegenden Erfindung. Der in Figur 3 dargestellte Materialstreifen 1 weist eine erste Längsseite 3 und eine zweite Längsseite 4 auf. Im Bereich der erste Längsseite 3 ist eine Vielzahl von Ausnehmungen 2 angeordnet, von denen der Einfachheit halber nur eine dargestellt ist. Bei dieser dritten Ausführungsform des erfindungsgemäßen Verfahrens befindet sich zwischen der ersten Längsseite 3 des Materialstreifens 1 und der Ausnehmung 2 ein Dehnbereich 7. Dieser Dehnbereich 7 ist dazu vorgesehen, bei der Durchführung des Verfahrensschrittes b) gedehnt zu werden, wobei dieser Dehnbereich 7 durch den Dehnvorgang seine endgültige Form erhält. Selbstverständlich können auch bei der dritten Ausführungsform des erfindungsgemäßen Verfahrens in Figur 3 nicht dargestellte Befestigungsdurchbrüche vorgesehen sein.

Weiterhin ist es möglich, die vorstehend beschriebenen Ausführungsformen des erfindungsgemäßen Verfahrens in Abhängigkeit von den an das zu bildende Rotorpaket gestellten Anforderungen beliebig zu kombinieren.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zur Herstellung eines Nuten aufweisenden Rotorpaketes für den Rotor einer elektrischen Maschine, insbesondere den Rotor eines Starters oder Startergenerators, mit den folgenden Schritten:
a) Vorsehen zumindest eines im Wesentlichen linearen Materialstreifens (1), der Ausnehmungen (2) aufweist, die den Nuten zugeordnet sind, wobei der Materialstreifen (1) eine erste Längsseite (3) und eine zweite Längsseite (4) aufweist,
b) Hochkantrollen des Materialstreifens (1), derart, dass der Materialstreifen (1) über seine zweite Längsseite (4) gebogen wird, und
c) Bilden des Rotorpaketes aus einem oder mehreren der hochkantgerollten Materialstreifen.

2. Verfahren nach Anspruch 1, **dadurch gekennzeichnet, dass** Schritt a) die folgenden Schritte umfasst:
a1) Vorsehen des linearen Materialstreifens (1),
a2) plastisches Verformen des Materialstreifens (1), derart, dass auf einer ersten Längsseite (3) des Materialstreifens (1) eine Wellenkontur (5) entsteht, und
a3) Ausbilden der Ausnehmungen (2) in dem die Wellenkontur (5) aufweisenden Materialstreifen (1).

3. Verfahren nach Anspruch 1 oder 2, **dadurch gekennzeichnet, dass** die Ausnehmungen (2) zumindest vor der Durchführung des Schrittes b) ringsum von dem Material des Materialstreifens umgeben sind.

4. Verfahren nach einem der vorhergehenden Ansprüche, **dadurch gekennzeichnet, dass** die Ausnehmungen (2) derart gebildet werden, dass zwischen den Ausnehmungen (2) und der ersten Längsseite (3) des Materialstreifens (1) jeweils ein Steg (6a, 6b) verbleibt, und dass die Stege (6a, 6b) bei der Durchführung des Schrittes b) in ihre endgültige Lage gezogen werden.

5. Verfahren nach einem der vorhergehenden Ansprüche, **dadurch gekennzeichnet, dass** die Stege (6a, 6b) zumindest vor der Durchführung des Schrittes b) gebogen sind.

6. Verfahren nach einem der vorhergehenden Ansprüche, **dadurch gekennzeichnet, dass** die Ausnehmungen (2) derart gebildet werden, dass zwischen den Ausnehmungen (2) und der ersten Längsseite (3) des Materialstreifens (1) jeweils ein Dehnbereich (7) verbleibt, und dass die Dehnbereiche (7) bei der Durchführung des Schrittes b) gedehnt werden.

7. Verfahren nach einem der vorhergehenden Ansprüche, **dadurch gekennzeichnet, dass** der Schritt c) das Bilden einer Wendel aus dem hochkantgerollten Materialstreifen umfasst.

8. Verfahren nach einem der vorhergehenden Ansprüche, **dadurch gekennzeichnet, dass** die Wendel mit einem Innendurchmesser von mindestens 180 mm gebildet wird.

9. Verfahren nach einem der vorhergehenden Ansprüche, **dadurch gekennzeichnet, dass** die Ausnehmungen (2) durch Stanzen gebildet werden.

10. Verfahren nach einem der vorhergehenden Ansprüche, **dadurch gekennzeichnet, dass** der Materialstreifen (1) aus einem Stahlwerkstoff gebildet ist.

11. Verfahren nach einem der vorhergehenden Ansprüche, **dadurch gekennzeichnet, dass** die Ausnehmungen beziehungsweise die Nuten dazu ausgelegt sind, zumindest teilweise mit einem Material gefüllt zu werden, das einen Aluminiumanteil aufweist.

12. Verfahren nach einem der vorhergehenden Ansprüche, **dadurch gekennzeichnet, dass** die Ausnehmungen beziehungsweise die Nuten dazu ausgelegt sind, zumindest teilweise mit einem Material gefüllt zu werden, das einen Kupferanteil aufweist.

13. Verfahren nach einem der vorhergehenden Ansprüche, **dadurch gekennzeichnet, dass** in dem Materialstreifen (1), vor der Durchführung des Schrittes b), zusätzlich zu den Ausnehmungen (2) Befestigungsdurchbrüche (8) vorgesehen werden.

14. Vorrichtung zur Durchführung des Verfahrens nach einem der vorhergehenden Ansprüche.

15. Rotorpaket für den Rotor einer elektrischen Maschine, insbesondere für den Rotor eines Starters oder eines Startergenerators, **dadurch gekennzeichnet, dass** das Rotorpaket aus einem oder mehreren hochkantgerollten Materialstreifen besteht.

16. Rotorpaket nach Anspruch 15, **dadurch gekennzeichnet, dass** es Nuten aufweist, die durch in dem hochkantgerolltem Materialstreifen vorgesehene Ausnehmungen (2) gebildet sind.

17. Rotorpaket nach einem der Ansprüche 15 oder 16, **dadurch gekennzeichnet, dass** die Nuten nach außen gerichtet sind.

18. Rotorpaket nach einem der Ansprüche 15 bis 17, **dadurch gekennzeichnet, dass** die Nuten geschlossen sind.

19. Rotorpaket nach einem der Ansprüche 15 bis 18, **dadurch gekennzeichnet, dass** die Ausnehmungen beziehungsweise die Nuten dazu ausgelegt sind, zumindest teilweise mit einem Material gefüllt zu werden, das einen Aluminiumanteilaufweist.

20. Rotorpaket nach einem der Ansprüche 15 bis 19, **dadurch gekennzeichnet, dass** die Ausnehmungen beziehungsweise Nuten dazu ausgelegt sind, zumindest teilweise mit einem Material gefüllt zu werden, das einen Kupferanteil aufweist.
